# EUROPÄISCHE PATENTSCHRIFT

(11) **EP 1 060 063 B1**
(45) Veröffentlichungstag und Bekanntmachung des Hinweises auf die Patenterteilung: **19.06.2002**
(21) Anmeldenummer: 99914484.3
(22) Anmeldetag: 06.03.1999
(51) Int. Cl.: B29C 31/00, B29C 45/40

(54) **VORRICHTUNG ZUM AUFNEHMEN UND TRANSPORTIEREN VON FORMTEILEN**
DEVICE FOR RECEIVING AND CONVEYING MOLDED PARTS
DISPOSITIF POUR RECEVOIR ET TRANSPORTER DES PIECES MOULEES

(30) Priorität: 06.03.1998 DE 19809723
(43) Veröffentlichungstag der Anmeldung: 20.12.2000
(73) Patentinhaber: Krauss-Maffei Kunststofftechnik GmbH, 80997 München (DE)
(72) Erfinder: LICHTINGER, Peter, D-82256 Fürstenfeldbruck (DE)
(74) Vertreter: Rucker, Bernd, Dipl.-Ing.
(86) Internationale Anmeldenummer: EP9901456
(87) Internationale Veröffentlichungsnummer: WO9944799

(56) Entgegenhaltungen:
- EP-A- 0 449 002
- DE-A- 2 007 936
- DE-A- 19 542 102
- GB-A- 1 105 480
- GB-A- 2 065 544
- GB-A- 2 093 757
- US-A- 4 005 965
- US-A- 4 519 767
- PATENT ABSTRACTS OF JAPAN vol. 009, no. 213 (M-408), 30. August 1985 (1985-08-30) & JP 60 071405 A (SEIKO DENSHI KOGYO KK), 23. April 1985 (1985-04-23)
- PATENT ABSTRACTS OF JAPAN vol. 004, no. 177 (P-039), 9. Dezember 1980 (1980-12-09) & JP 55 120008 A (FUJITSU LTD), 16. September 1980 (1980-09-16)

## Beschreibung

Die Erfindung betrifft eine Vorrichtung zum Aufnehmen und Transportieren von in Kavitäten hergestellten Formteilen, insbesondere von Kunststoffformteilen, durch eine Produktionslinie mit mehreren Arbeitsstationen gemäß dem Oberbegriff des Patentanspruchs 1 sowie eine Vorrichtung gemäß dem Oberbegriff des Patentanspruchs 21.. Bevorzugtes Anwendungsgebiet der Erfindung ist die Herstellung von hochwertigen, flächigen Kunststoffteilen, insbesondere die Herstellung von Kunststoffscheiben.

Aus dem Stand der Technik ist es bekannt, in einer Arbeitsstation einer Kunststoff verarbeitenden Maschine für die Herstellung von Formteilen mit mehreren Komponenten eine sogenannte Indexplatte zu verwenden, mit der die Formteile zwischen den einzelnen Takten innerhalb dieser Arbeitsstation umgesetzt werden können. Die Indexplatte ist als Transferrahmen ausgebildet und verfügt über Halteelemente, an die das Formteil zunächst angeformt und mit diesen umgesetzt wird. Zur Entnahme der Formteile werden die Halteelemente von dem Formteil wegbewegt und dieses wird mit einem eigenen Handlingsystem entnommen oder fällt aus der Arbeitsstation heraus. Bei einer Zwei-Takt-Maschine dreht sich die Indexplatte vom ersten zum zweiten Takt um 180°, bei mehreren Takten mit entsprechend kürzeren Umdrehungen. Die Indexplatte mit ihren Halteelementen verbleibt jedenfalls in dieser Arbeitsstation.

Die deutsche Offenlegungsschrift DE 195 42 102 A1 offenbart ein Werkzeug zum Mehrkomponentenspritzgießen von Kunststoff-Bürstenkörpem für Zahnbürsten. Dieses Werkzeug weist eine Transporteinrichtung auf, mit der Grundkörper-Spritzlinge von ersten Formnestern zu zweiten Formnestern transportiert werden können, in denen die Grundkörper-Spritzlinge umspritzt werden. Um den Transport der Grundkörper-Spritzlinge aus den ersten Formnestern zu den zweiten Formnestern möglichst schnell ausführen zu können, sind zwei Quertraversen vorgesehen, die zyklisch zwischen den Formnestern hin- und herbewegt werden. Diese Quertraversen dienen gleichzeitig als Transfermittel und als Formteilhaltevorrichtung, an das die Kunststoffteile angeformt werden (Transporteinrichtung 8 mit Wechselbewegung der Bürstenkörperhaltevorrichtungen 13 und 14).

Vorrichtungen zum Aufnehmen und Transportieren von in Kavitäten hergestellten Kunststoffformteilen gemäß dem Oberbegriff von Patentanspruch 1 sind aus dem Bereich des automatisierten Pressens von Schallplatten bekannt (gattungsbildende US-A 4 005 965 sowie DE 20 07 936 A, GB-.A-2 065 544 und GB-A-1 105 480). Bei diesem Stand der Technik kommen Transfer- und Haltemittel zum Einsatz, die zyklisch zwischen zwei Arbeitsstationen translatorisch oder rotatorisch hin- und herbewegt werden, wobei jeweils nur ein Transferrahmen oder dergleichen zum Einsatz vorgesehen ist und eine zyklische Hin- und Herbewegung ausführt. Die Halteelemente sind für das Greifen und Umsetzen auf die Anforderungen der jeweiligen Arbeitsstation zugeschnitten und unterscheiden sich systembedingt je nach auszuführendem Arbeitsschritt von Arbeitsstation zu Arbeitsstation. Beispielsweise sind gemäß DE 20 07 936 zunächst Biskuitgreifer zum Aufnehmen und Umsetzen eines Vorfomlings aus einer ersten Arbeitsstation in eine zweite Arbeitsstation vorgesehen. Nach dem Pressen der Schallplatte aus dem Vorformling kommen Plattengreifer zum Einsatz, um die Schallplatte in der zweiten Arbeitsstation aufzunehmen und in eine dritte Arbeitsstation umzusetzen. Nach dem Umsetzen werden der Biskuitgreifer und der Plattengreifer jeweils leer um eine Arbeitsstation zurückbewegt, um erneut ein für sie vorgesehenes Teil aufzunehmen und in die nächste Arbeitsstation umzusetzen. Durch das zyklische Hin- und Herbewegen des Transfermittels kommt das auf die jeweilige Arbeitsstation zugeschnittene Greif- und Halteelement stets an derselben Arbeitsstation zum Einsatz. Für den Transport durch die gesamte Produktionslinie werden die Kunststoffformteile stets abgesetzt und erneut aufgenommen. Dies ist bei der Herstellung von hochwertigen Kunststoffscheiben, dem bevorzugten Anwendungsgebiet der vorliegenden Erfindung, ungünstig, da bei einem ständigen Absetzen und erneuten Greifen die Gefahr von Beschädigungen besteht. Außerdem verlängert sich die Zeit für einen Produktionszyklus, wenn das Formteil von Arbeitsstation zu Arbeitsstation stets abgesetzt und wieder aufgenommen werden muss.

Eine Vorrichtung zum Aufnehmen und Transportieren von in Kavitäten hergestellten Kunststoffformteilen gemäß dem Oberbegriff von Patentanspruch 21 ist aus dem Dokument JP 60 071405A, PATENT ABSTRACTS OF JAPAN bekannt. In diesem Dokument wird für den Transport von Kunststoffformteilen die über Füße verfügen, vorgeschlagen, ein Transportband mit Löchern zu verwenden und die Formteile über ihre Füße an das Transportband anzuformen. Für Kunststoffformteile ohne Füße scheint dieses Transportsystem nicht geeignet zu sein oder man müsste die Füße in einem späteren Arbeitsschritt wieder entfernen. Die in dieser Druckschrift offenbarte Transporteinrichtung scheint außerdem eher für Kleinteile geeignet. Für das bevorzugte Anwendungsgebiet der vorliegenden Erfindung, nämlich die Herstellung von hochwertigen, flächigen Kunststoffteilen, insbesondere Kunststoffscheiben, ist ein derartiges Transportsystem nicht geeignet, da diese nicht hochkant stehend mit einem derartigen Transportband durch die Produktionslinie transportiert werden könnten. Bei einem liegenden Transport würden sich die flächigen Kunststoffteile durchbiegen, wenn man sie nur am Rand unterstützen und auf dem Transportband fixieren darf.

In JP 55 120008A, PATENT ABSTRACTS OF JAPAN, wird ein Draht symmetrisch umspritzt, um ein Formteil mit einer zylindrischen Bohrung zu erhalten. Hierzu wird nach der Formteilentnahme der Dreht durchtrennt und aus dem Formteil herausgezogen. Der Draht dient nicht als Lineartransportsystem, sondern als Hilfselement zur Erzeugung der zylindrischen Bohrung in dem Kunststoffformteil. Ohne Durchtrennung des Draht kann das Formteil nicht von dem Draht entfernt werden. Demgegenüber ist eine Durchtrennung des Lineartransportsystems zur Formteilentnahme beim Anmeldungsgegenstand nicht möglich, ohne den Anmeldungsgegenstand zu zerstören.

Der Erfindung liegt nun die Aufgabe zugrunde, eine Vorrichtung anzugeben, mit der in Kavitäten hergestellte Formteile, insbesondere Kunststofformteile, aus den Kavitäten entnommen und durch eine Produktionslinie mit mehreren Arbeitsstationen transportiert werden können.

Die Lösung dieser Aufgabe erfolgt durch Vorrichtungen mit den Merkmalen der Patentansprüche 1 und 21. Vorteilhafte Weiterbildungen der Vorrichtung finden sich in den Unteransprüchen 2 bis 20 sowie 22 bis 26.

Der Hauptvorteil der Erfindung liegt darin, daß die Formteile eine Produktionslinie mit mehreren Arbeitsstationen durchlaufen können, ohne daß das Formteil selbst angefaßt werden muß. Dies ist besonders wichtig bei der Herstellung von hochwertigen Kunststoffscheiben, da somit jede Beeinträchtigung der Qualität oder eine Beschädigung der Oberfläche ausgeschlossen wird, wenn diese nicht angefaßt werden muß. Hierzu wird gemäß der Erfindung vorgeschlagen, einen Transferrahmen zu verwenden, der durch die Prdouktionslinie bewegt wird und der über Halteelemente verfügt, an die das Formteil in der Kavität angeformt wird. Der Transferrahmen wird dann zusammen mit dem Formteil aus der jeweiligen Arbeitsstation entnommen und kann auf der Bearbeitungsstrecke weiter transportiert werden. Hierzu ist es erforderlich, daß die Werkzeuge im Bereich der Halteelemente Ausnehmungen entsprechend der Kontur der Haltelemente aufweisen, so daß diese bei geschlossenem Werkzeug formschlüssig mit den Trennflächen der Werkzeughälften abdichten. Dabei ist darauf zu achten, daß sich die Halteelemente derart in den Zwischenraum zwischen die Trennflächen erstrecken, daß sie bei der Herstellung des Formteils mit diesen eine Verbindung eingehen.

Für den Transport der Transferrahmen durch die Bearbeitungsstrecke können gemäß Unteranspruch 5 und 6 Linearführungen mit entsprechenden Führungsschienen vorgesehen werden. Auf diesen können die Transferrahmen stehend oder hängend durch die Bearbeitungsstrecke transportiert werden. Alternativ dazu sehen die Ausführungsformen, wie sie in den Unteransprüchen 7 bis 10 angegeben sind, mit Greifern versehene Greifarme zum Bewegen der Transferrahmen vor.

Bei der Herstellung von flächigen Kunststoffteilen im Spritzpräge-Verfahren mit Tauchkantenwerkzeugen müssen Maßnahmen vorgesehen werden, um die Formteile aus der festen oder der beweglichen Werkzeughälfte auszuheben. Hierzu wird gemäß Unteranspruch 12 vorgesehen, die Linearführung im Bereich der Werkzeughälften mit Teilstücken zu versehen, die orthogonal zur Trennebene der Werkzeughälften bewegbar sind. Hierzu können die Teilstücke beispielsweise nach Art eines Kreuztisches ausgebildet sein. Für einen möglichst leichten Lauf der Transferrahmen auf der Linearführung sieht Unteranspruch 14 vor, diese als Kugellinearführung auszubilden.

Für das bevorzugte Anwendungsgebiet der Erfindung ist es erforderlich, Halteelemente zu verwenden, die an den Rand der Scheibe angeformt und leicht wieder gelöst werden können. Gemäß den Unteransprüchen 15 bis 17 werden daher Halteelemente vorgeschlagen, die besonders gestaltete Spitzen besitzen, die in den Rand der Scheibe eingreifen. Zum Wegbewegen der Halteelemente von den Scheiben sind diese in dem Transferrahmen verschiebbar gelagert (Unteranspruch 19) und können mit geeigneten Mitteln darin verschoben werden (Unteranspruch 20).

Eine kostengünstige Variante der vorliegenden Erfindung ist im nebengeordneten Patentanspruch 21 angegeben. Hierbei wird gänzlich auf die Verwendung von Transferrahmen und Halteelementen verzichtet. Vielmehr wird ein Lineartransportsystem, wie beispielsweise ein Transportseil, sowohl zum Aufnehmen als auch zum Transportieren der Formteile verwendet. Das Transportseil besitzt somit eine Doppelfunktion und ersetzt den Transferrahmen und die Halteelemente. In diesem Fall greift das Transportsystem direkt in die Kavitäten ein und die Werkzeuge sind im Bereich der Lineartransportsysteme mit Ausnehmungen entsprechend dem Querschnitt der Lineartransportsysteme versehen, so daß diese bei geschlossenem Werkzeug formschlüssig mit den Trennflächen der Werkzeughälften abdichten. Eine besonders vorteilhafte Ausführungsform sieht gemäß Unteranspruch 23 vor, ein Seil zu verwenden und bei der Anformung des Formteils dieses nur soweit zu umfassen, daß es in seinem Querschnitt nicht vollständig umfaßt ist. Das Formteil kann dann leicht von dem Seil abgedrückt werden. Für den Einsatz im Spritzpräge-Verfahren, also bei der Verwendung von Tauchkantenwerkzeugen, ist es vorteilhaft, gemäß Unteranspruch 26 ein oder mehrere Hubelemente vorzusehen, mit denen die Lineartransportsysteme orthogonal zur Transportrichtung bewegbar sind, damit das Formteil aus der festen oder der beweglichen Werkzeughälfte abgehoben werden kann.

Die vorliegende Erfindung eignet sich sowohl für das Einkomponentenals auch insbesondere für das Mehrkomponentenspritzen von Kunststofformteilen. Der Erfindung kann sowohl bei Horizontal als auch bei vertikal Spritzgieß- bzw. Spritzprägemaschinen eingesetzt werden. Besonders geeignet ist die Erfindung für die Herstellung auch größerer, flächiger Kunststoffteile mit extremen, optischen Oberflächeneigenschaften. Außerdem ermöglicht der Einsatz der Erfindung, mit einem kleinen Werkzeug-Öffnungs-Raum zu arbeiten, der leichter unterReinluft-Bedingungen gehalten werden kann. Es kann also mit geringerem Aufwand unter Reinluft-Bedingungen gearbeitet werden. Darüberhinaus bietet die Erfindung einen hohen Freiheitsgrad für die konstruktive Gestaltung der Kunststoffteile, da beliebige Komponenten an das Hauptkunststoffteil angespritzt werden können, und zwar ganz oder teilweise und einseitig oder beidseitig oder auch total einseitig (overlay). Außerdem erlaubt die erfindungsgemäße Vorrichtung das Arbeiten mit sehr kurzen Taktzeiten.

Nachfolgend wird die Erfindung anhand von Ausführungsbeispielen und unter Bezugnahme auf die Fig. 1 bis 10b näher erläutert. Es zeigen:
- Fig. 1:: Querschnitt (links) und Seitenansicht (rechts) einer zweiten Ausführungsform der Erfindung im Bereich einer Arbeitsstation mit untenliegender Führungsschiene und stehend angeordnetem Transferrahmen.
- Fig. 2:: Querschnitt (links) und Seitenansicht (rechts) einer ersten Ausführungsform der Erfindung im Bereich einer Arbeitsstation mit obenliegender Führungsschiene und hängend angeordneten Transferrahmen.
- Fig. 3:: Draufsicht auf eine Arbeitsstation mit geöffnetem (links) und geschlossenem (rechts) Werkzeug.
- Fig. 4:: Arbeitsstation zum gleichzeitigen Herstellen von zwei Scheiben mit zwei Komponenten mit zwei obenliegenden Führungsschienen und hängend angeordneten Transferrahmen.
- Fig. 5:: Detailansicht (im Querschnitt) eines hängend oder stehend angeordneten Transferrahmens.
- Fig. 6a bis 6h:: Verschiedene Ausführungsformen des Halteelements.
- Fig. 7:: Transferrahmen mit integrierter Kolben-Zylinder-Einheit für das Halteelement.
- Fig. 8:: Eine weitere Ausführungsform der Erfindung mit einem Transportseil zum Aufnehmen und Transportieren der Formteile.
- Fig. 9a und 9b:: Details der Anformung einer Kunststoffscheibe an das Transportseil.
- Fig. 10a und 10b:: Anbindung der Scheibe an das Transportseil mittels Transporthaken in Seitenansicht (Fig. 10a) und im Querschnitt (Fig. 10b).

Die nachfolgend beschriebenen Ausführungsbeispiele betreffen die Herstellung von Kunststoffscheiben, wie sie beispielsweise als Seitenscheiben für PKW's verwendet werden. Die Erfindung ist jedoch nicht hierauf beschränkt, sondern allgemein für die Herstellung und die Weiterverarbeitung von in Kavitäten hergestellten Formteilen geeignet.

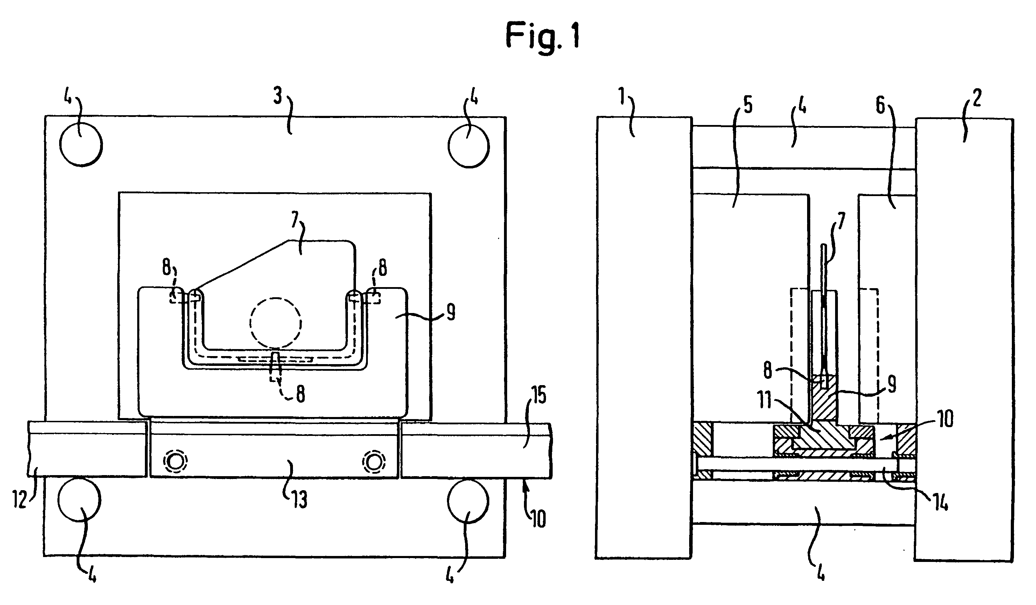

Fig. 1 zeigt eine bewegliche und eine feste Werkzeugaufspannplatte einer Kunststoff verarbeitenden Maschine, die auf vier an einem Maschinenrahmen 3 angeordneten Holmen 4 geführt werden. Auf den Werkzeugaufspannplatten 1,2 sind Werkzeughälften 5 und 6 angeordnet, die im geschlossenen Zustand eine Kavität bilden, in die plastifizierter Kunststoff eingegeben und zu einer Scheibe 7 geprägt wird. In den Werkzeughälften sind Ausnehmungen vorgesehen, in die die Halteelemente 8 paßgenau eingreifen, so daß sie bei geschlossenem Werkzeug formschlüssig mit den Trennflächen der Werkzeughälften abdichten. Die Halteelemente 8 sind in einem Transferrahmen 9 angebracht, der außerhalb der Werkzeugkontur verbleibt, wenn die Werkzeughälften geschlossen sind. Bei der Herstellung der Scheibe wird diese an die Halteelemente 8 angeformt und kann anschließend mit dem Transferrahmen 9 aus der Arbeitsstation herausgenommen und zu weiteren Arbeitsstationen transportiert werden. Für die Bewegung der Transferrahmen ist eine Führungsschiene 10 mit einer T-förmigen Ausnehmung vorgesehen, in die das T-förmige Fußstück 11 des Transferrahmens 9 eingreift. Für die Herstellung einer Scheibe 1 wird zunächst ein leerer Transferrahmen 9 mit seinen Halteelementen 8 auf einer Einfahrstation 12 bereitgehalten und - nach dem der vorherige Transferrahmen die Arbeitsstation verlassen hat - auf das Teilstück 13 geschoben, das orthogonal zur Transportrichtung auf einer Schiene 14 bewegt werden kann. Das Teilstück 13 mit dem Transferrahmen 9 wird zur beweglichen Werkzeugaufspannplatte 1 verfahren und dort lagerichtig positioniert. Dies ist insbesondere bei der Verwendung von Tauchkantenwerkzeugen wichtig, damit ein sauberes Ineinandergreifen von Kern und Matrize sichergestellt ist. Anschließend wird die bewegliche Werkzeugaufspannplatte mit dem Kern und den in die Kavität eingreifenden Halteelementen 8 (also auch mit dem Transferrahmen 9) in Richtung der festen Werkzeugaufspannplatte 2 verfahren. Sobald die Kavität geschlossen ist, kann plastifizierter Kunststoff in diese eingegeben und ein Prägehub ausgeführt werden. Nach Abschluß des Spritzprägens und ausreichender Erkaltung der Scheibe 1 wird das Werkzeug geöffnet und das Führungsschienenteilstück 13 mit dem Transferrahmen 9, an dem nun über die Halteelemente 8 die Scheibe 7 angeformt ist, fluchtend zwischen die Einfahrstation 12 und die Ausfahrstation 15 verfahren. Der Transferrahmen 9 kann nun mit der Scheibe 7 diese Arbeitsstation verlassen und weiteren Arbeitsstationen zugeführt werden, beispielsweise zum Anspritzen weiterer Komponenten oder für eine Oberflächenbehandlung der Scheibe. Zum Verschieben der Transferrahmen 9 können hydraulisch und/oder pneumatisch betätigbare Kolben-Zylinder Einheiten vorgesehen werden, die den an der Einfahrstation 12 befindlichen leeren Transferrahmen 9 in die Arbeitsstation einschieben und den vorherigen Transferrahmen mit der fertigen Scheibe 7 gleichzeitig aus dieser Arbeitsstation herausschieben. Hierzu sind die Transferrahmen 9 mit geeignet langen Fußstücken 11 oder mit entsprechend langen Zwischenstücken ausgestattet.

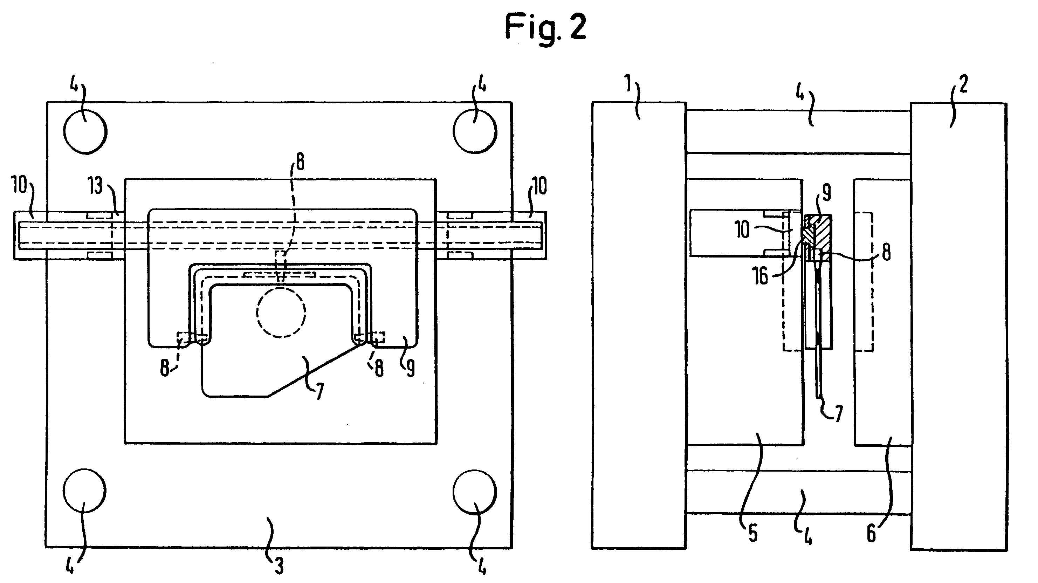

Im Gegensatz zu Fig. 1 sind bei der Ausführungsform gemäß Fig. 2 die Transferrahmen 9 hängend angeordnet und werden an einer oben liegenden Führungsschiene 10 verschoben. Dementsprechend wird die Scheibe 7 im hängendem Zustand an die Halteelemente 8 und den Transferrahmen 9 angeformt. In diesem Fall besitzt die Führungsschiene 10 einen T-förmigen Querschnitt 16 und der Transferrahmen 9 verfügt über eine entsprechende T-förmige Ausnehmung, in die das T-Stück der Führungsschiene eingreift. Die Arbeitsweise und die Bewegung der Transferrahmen entspricht dem Ausführungsbeispiel von Fig. 1.

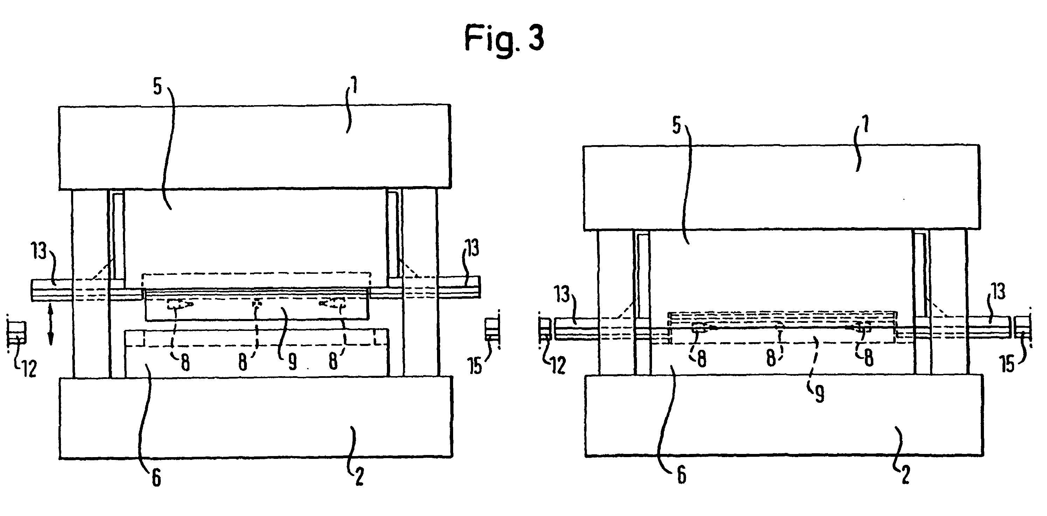

Fig. 3 zeigt eine Draufsicht auf die Arbeitsstation, wobei das verfahrbare Teilstück 13 der Führungsschiene 10 einmal bei geöffnetem Werkzeug am Kern positioniert ist (linke Darstellung) und im geschlossenem Zustand (rechte Darstellung). In der linken Darstellung ist das verfahrbare Teilstück 13 von der Einfahrstation 12 und der Ausfahrstation 15 in Richtung der beweglichen Werkzeugaufspannplatte verschoben. Bei geschlossenem Werkzeug (rechte Darstellung) kann das Teilstück 13 mit der Einfahrstation 12 und der Ausfahrstation 15 fluchten, was aber nicht zwingend der Fall sein muß, d.h. die Einfahrstation 12 und die Ausfahrstation 13 können auch anders positioniert werden, denn das Teilstück 13 ist zwischen der beweglichen und der festen Werkzeugaufspannplatte beliebig verfahrbar.

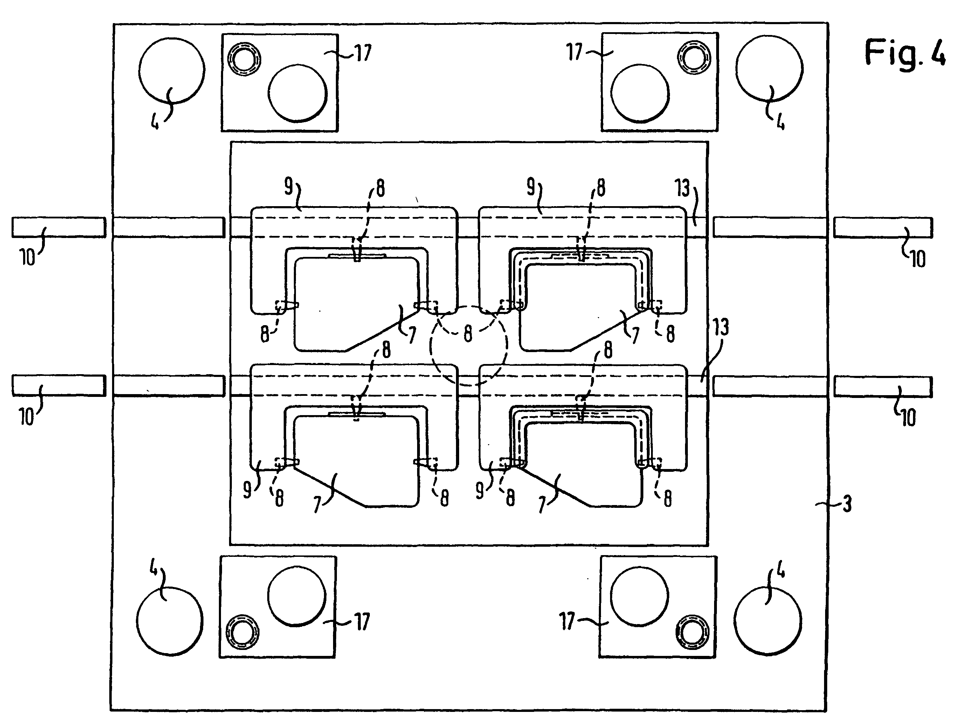

Fig. 4 zeigt eine Arbeitstation für die gleichzeitige Herstellung von zwei Scheiben im Mehr-Komponenten-Spritzpräge-Verfahren. Zwei Führungsschienen 10 für den hängenden Transport der Transferrahmen 9 mit den an den Halteelementen 8 angeformten Scheiben 7 sind übereinander angeordnet und verlaufen quer durch den Maschinenrahmen 3. Damit sich die Werkzeugaufspannplatten sauber und parallel aufeinanderzubewegen, sind vier Gleichlaufeinrichtungen 17 vorgesehen, die in ihren Bereichen den jeweiligen Abstand der Werkzeugaufspannplatten voneinander messen und entsprechend dem von einer Auswerteeinheit gelieferten Meßergebnis nachregeln. Für die Bewegung der Transferrahmen 9 zwischen den Werkzeugaufspannplatten sind die Teilstücke 13 der Führungsschiene 10 orthogonal zur Transportrichtung verschiebbar gelagert. Wie bei den Ausführungsbeispielen gemäß den Fig. 1 bis 3 werden auch hier die Transferrahmen 9 in leerem Zustand an der Einfahrstation 12 bereitgestellt und bei geöffnetem Werkzeug in den Zwischenraum zwischen die Werkzeughälften geschoben. Nach Fertigstellung der Scheibe wird durch Nachschieben eines leeren Transferrahmens 9 der mit der Scheibe 7 gefüllte Transferrahmen 9 aus der Arbeitsstation hinausgeschoben und verläßt bei der Ausfahrstation 15 die erste Arbeitsstation. Durch weiteres Durchtakten (Nachschieben von leeren Transferrahmen 9) werden die gefüllten Transferrahmen 9 auf den Führungsschienen 10 weitergeschoben und erreichen zu einem späteren Zeitpunkt eine nächste Arbeitsstation.

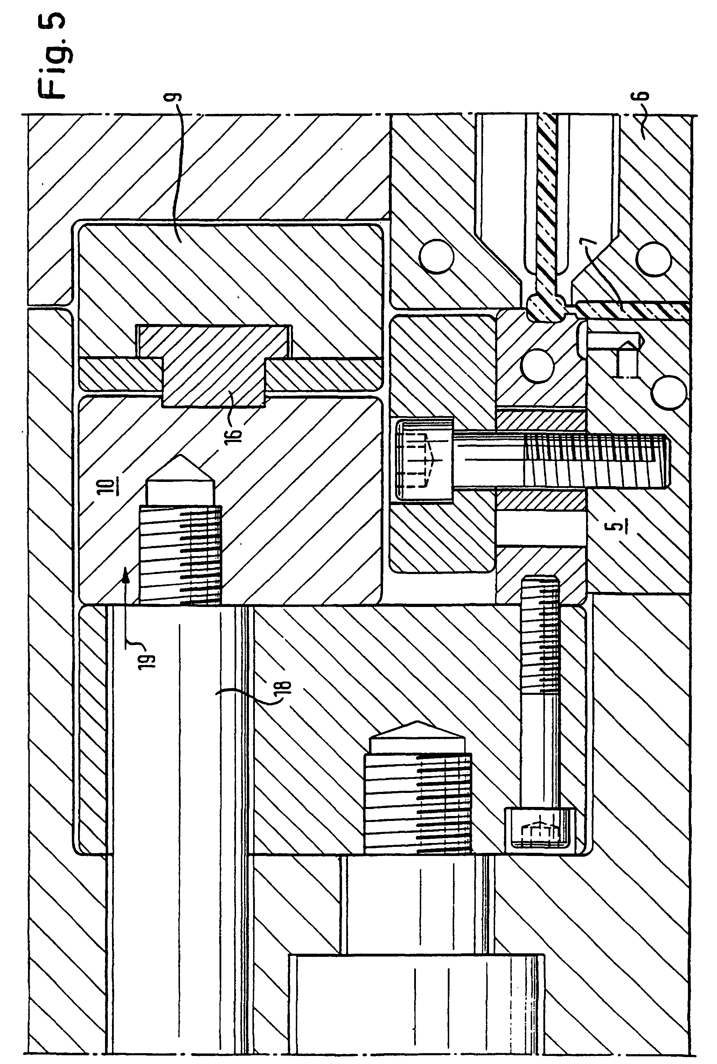

Fig. 5 zeigt im Querschnitt einen hängend angeordneten Transferrahmen 9 der an einer Führungsschiene 10 mit einem T-förmigen Führungselement 16 aufgehängt ist. Hierzu verfügt der Transferrahmen 9 über eine entsprechende T-förmige Ausnehmung. Die Führungsschiene 10 ist im Bereich der Werkzeugaufspannplatten als Trägerplatte für den Transferrahmen ausgebildet und ist an eine Koben-Zylinder-Einheit 18 angeschlossen, so daß eine Hubbewegung in Richtung des Pfeils 19 erfolgen kann, so daß die Scheibe 7 von der beweglichen Werkzeugaufspannplatte 1 bzw. dem Kern 5 abgehoben werden kann. Anschließend wird der Transferrahmen 9 mit der Scheibe 7 auf dem hier nicht dargestellten verfahrbaren Teilstück 13 in die Ausgangsposition zurückgefahren und durch Nachschieben eines leeren Transferrahmens 9 aus der Arbeitsstation hinausgeschoben. Zum besseren Verständnis sind die Halteelemente 8 hier nicht dargestellt. Sie können sich beispielsweise außerhalb der Zeichenebene befinden. Fig. 5 stellt im wesentlichen eine Detailansicht der rechten Darstellung von Fig. 2 dar.

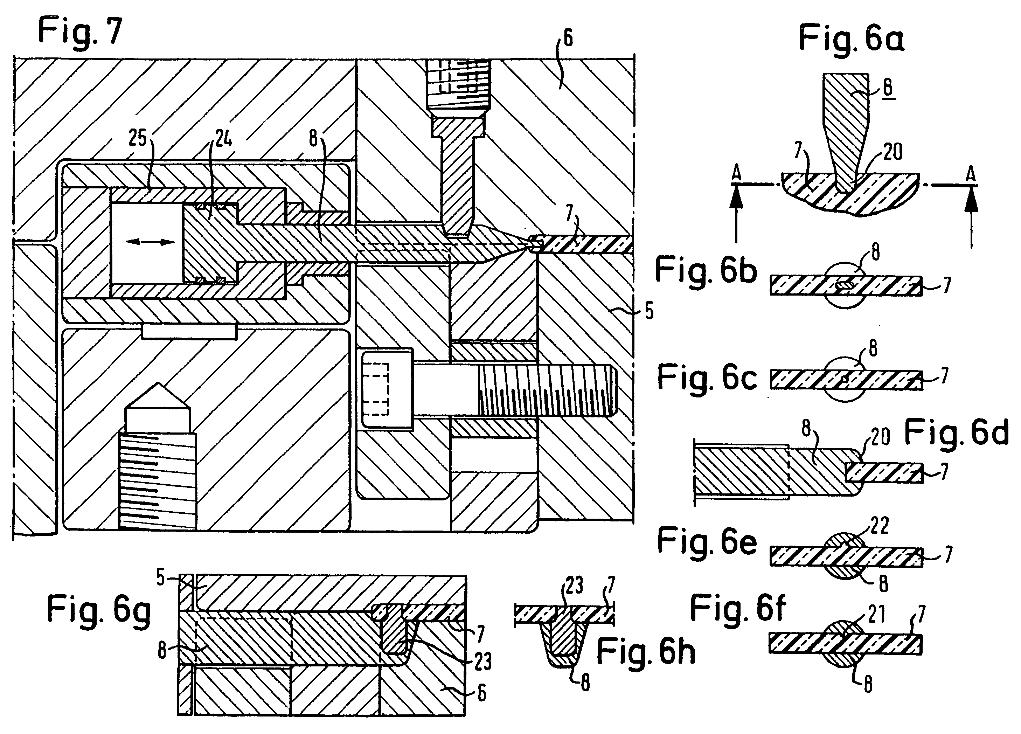

Fig. 6a zeigt im Querschnitt eine erste Ausführungsform der Anformung der Scheibe 7 an das Halteelement 8. Hierzu wird eine Spitze 20 vorgesehen, die einen langlochförmigen Querschnitt (Fig. 6b) oder einen zylindrischen Querschnitt (Fig. 6c) besitzt. In den Fig. 6b und 6c ist ein Schnitt entlang der Linie A-A von Fig. 6a dargestellt.

In den Fig. 6d bis 6f ist eine zweite Ausführungsform der Halteelemente 8 dargestellt, die eine Spitze 20 mit einer U-förmigen Ausnehmung besitzen, in die der plastifizierte Kunststoff eindringt, so daß die fertige Scheibe 7 von der Spitze 20 des Halteelements 8 umfaßt wird. Um ein seitliches Verrutschen der Scheibe zu verhindern, kann eine Zentriernut 21 oder ein Zentriersteg 22 in der U-förmigen Ausnehmung der Spitze 20 vorgesehen werden (Fig. 6e und 6f).

In den Fig. 6g und 6h ist eine weitere Ausführungsform des Halteelements 8 dargestellt, bei dem ein Stift 23 im Ende des Haltelements 8 eingelassen ist und der von der Scheibe 7 umfaßt wird. Der Fig. 6g ist weiterhin zu entnehmen, daß die Werkzeughälften 5 und 6 im Bereich des Halteelements 8 mit Ausnehmungen versehen sind und im geschlossenem Zustand dicht anliegen, so daß kein Kunststoff aus der Kavität austreten kann.

Gemäß Fig. 7 verfügt das Halteelement 8 über ein Kopfstück 24, das die Funktion eines Kolbens übernimmt und in einem Zylinder 25 liegt. Damit wird eine Kolben-Zylinder-Einheit 24,25 gebildet, mit der das Halteelement 8 im Transferrahmen verschiebbar ist und dieses von der Scheibe 7 abgelöst werden kann, beispielsweise um das fertige Teil 7 am Ende der Prdouktionslinie aus dem Transferrahmen 9 zu entnehmen.

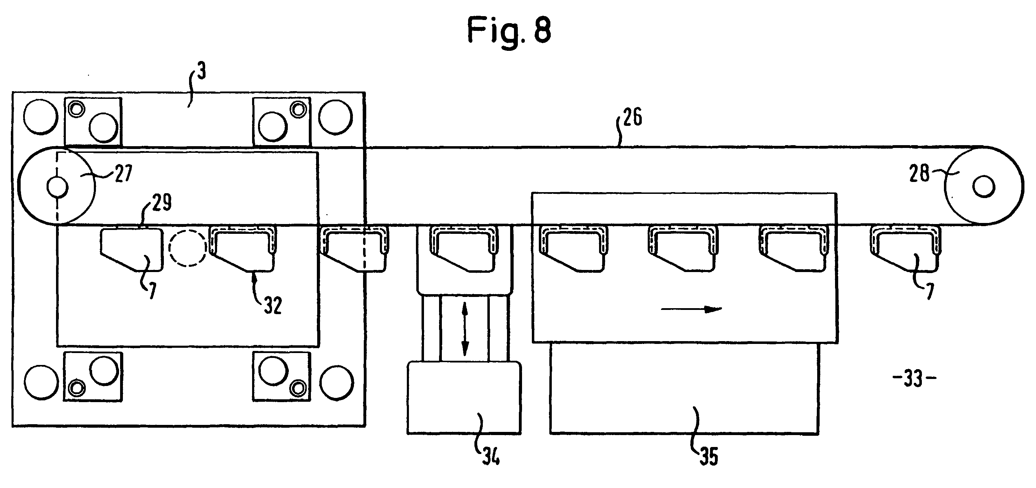

Eine alternative Ausführungsform der erfindungsgemäßen Vorrichtung ist in Fig. 8 dargestellt und verfügt über ein Transportseil 26, das über zwei Umlenkrollen 27 und 28 geführt wird, wobei eine der Umlenkrollen über einen Antrieb verfügt. Der untere Teil des Transportseils 26 wird durch das Werkzeug geführt, das hierzu mit Ausnehmungen versehen ist, deren Querschnitt dem Querschnitt des Transportseils 26 entspricht. Bei geschlossenen Werkzeughälften verläuft das Transportseil 26 somit innerhalb der Kavität und dichtet formflüssig mit den Trennflächen der Werkzeughälften ab. Wenn bei geschlossener Kavität der plastifizierte Kunststoff eingespritzt und die Scheibe geprägt wird, erfolgt eine Anformung der Scheibe 1 über den Anguß 29, der aus einem zylindrischen Verteilerkanal 30 und einer Filmanbindung 31 besteht. Nach der Anformung der Scheibe 7 an das Transportseil 26 öffnen sich die Werkzeughälften und die Scheibe 1 kann von einer der beiden Werkzeughälften abgehoben werden. Das Transportseil bewegt sich dann mit dem daran angeformten Formteil zu der Takt-Zwei-Spritzung in der ersten Arbeitsstation weiter. Anschließend wird das Transportseil 26 ein weiteres Stück fortbewegt, damit wieder ein leeres Teilstück des Transportseils in der ersten Kavität positioniert wird. Durch einfachen Umlauf des Transportseils 26 können die Scheiben 7 weiteren Arbeitsstationen zugeführt und schließlich an einer Entnahmestation 33 entnommen werden. Beispielsweise kann in einer Lackierstation auf der Scheibe 7 eine Silikat-Hartschicht aufgebracht werden. In einer sich darin anschließenden Trockenstation 35 wird die Scheibe 1 mit der Silikatbeschichtung ausgehärtet.

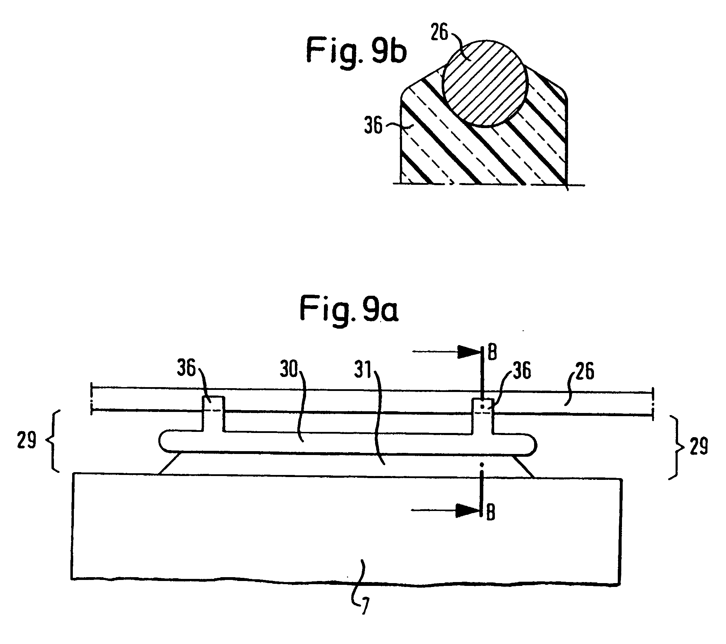

Fig. 9a zeigt eine an das Transportseil 26 angeformte Scheibe 7 in vergrößerter Darstellung, so daß der aus Verteilerkanal 30 und einer Filmanbindung 31 bestehende Anguß 29 deutlich erkennbar ist. Fig. 9b zeigt einen Querschnitt entlang der Linie B-B. Wie der Figur zu entnehmen ist, umgreift das von dem Anguß 29 abstehende Angußelement 36 das Transportseil 26 etwas mehr als die Hälfte, so daß einerseits ein sicherer Sitz des Angußelements 36 und damit auch ein guter Halt der Scheibe 7 gewährleistet ist. Andererseits kann durch diese Ausgestaltung an der Entnahmestation 33 das gesamte Formteil leicht von dem Transportseil 26 nach unten weggedrückt und losgelöst werden.

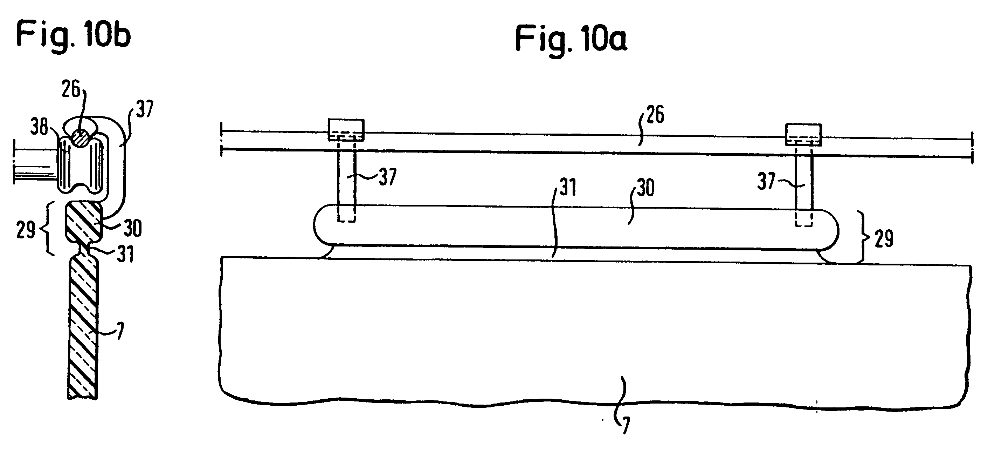

Die Fig. 10a und 10b zeigen eine Variante der erfindungsgemäßen Vorrichtung mit Transportseil. Hier sind Transporthaken 37 vorgesehen, die das Transportseil 26 von oben umgreifen und an die der Anguß angeformt ist. Das Transportseil 26 mit dem Transporthaken 37 wird über Rollenelemente 38 geführt. Die Anzahl der Transporthaken 37 oder der Angußelemente 36 richtet sich nach dem Gewicht, daß die Scheibe 7 nach der letzten Arbeitsstation aufweist.

### Bezugszeichenliste

- 1: bewegliche Werkzeugaufspannplatte
- 2: feste Werkzeugaufspannplatte
- 3: Maschinenrahmen
- 4: Holme
- 5,6: Werkzeughälften (Kern bzw. matrize)
- 7: Scheibe
- 8: Halteelemente
- 9: Transferrahmen
- 10: Führungsschienen
- 11: T-Fußstück des Transferrahmens
- 12: Einfahrstation
- 13: verfahrbares Teilstück der Führungsschiene
- 14: Schiene
- 15: Ausfahrstation
- 16: T-Stück der Führungsschiene
- 17: Gleichlaufeinrichtung
- 18: Kolben-Zylinder-Einheit
- 19: Hubbewegung
- 20: Spitze
- 21: Zentriernut
- 22: Zentriersteg
- 23: Stift
- 24: Kopfstück des Halteelements 8
- 25: Zylinder
- 26: Transportseil
- 27,28: Umlenkrollen
- 29: Anguß
- 30: Verteilerkanal
- 31: Filmanbindung
- 32: Takt-Zwei-Spritzung
- 33: Entnahmestation
- 34: Tauchstation
- 35: Trockenstation
- 36: Angußelement
- 37: Transporthaken
- 38: Rollenelement für Transportseil

## Patentansprüche

1. Vorrichtung zum Aufnehmen und Transportieren von in Kavitäten hergestellten Formteilen (7) insbesondere von Kunststoffformteilen (7) durch eine Produktionslinie mit mehreren Arbeitsstationen, wobei eine oder mehrere Arbeitsstationen mit Kavitäten bildenden Werkzeugen (5,6) ausgestattet sind,
**dadurch gekennzeichnet,**
**daß** mehrere, die Produktionslinie durchlaufende Transferrahmen (9) vorgesehen sind, die bei geschlossenem Werkzeug (5,6) außerhalb der jeweiligen Werkzeugkontur verbleiben, daß jeder dieser Transferrahmen (9) ein oder mehrere Halteelemente (8) aufweist, daß Mittel zum Bewegen dieser Transferrahmen (9) durch die Produktionslinie vorgesehen sind, daß die Werkzeuge (5,6) über Ausnehmungen im Bereich der Halteelemente (8) verfügen, so daß diese bei geschlossenem Werkzeug (5,6) formschlüssig mit den Trennflächen der Werkzeughälften (5,6) abdichten, wobei sich die Halteelemente (8) derart in den Zwischenraum zwischen die Trennflächen erstrecken, daß sie bei der Herstellung des Formteils (7) mit diesem eine Verbindung eingehen und eine Einheit aus Transferrahmen (9), Halteelementen (8) und Formteil (7) gebildet wird, wobei diese Einheit aus der jeweiligen Arbeitsstation entnommen und als Einheit durch die Produktionslinie bewegt wird, und wobei für jedes Formteil (7) jeweils ein neuer, leerer Transferrahmen (9) vorgesehen ist und zu Beginn der Produktionslinie bereitgestellt wird, so daß jeweils eine neue Einheit aus Transferrahmen (9), Halteelementen (8) und Formteil (7) gebildet und als Einheit durch die Produktionslinie bewegt wird.

2. Vorrichtung nach Anspruch 1 **dadurch gekennzeichnet, daß** zum Bewegen der Transferrahmen (9) hydraulisch und/oder pneumatisch betätigbare Kolben-Zylinder-Einheiten (18) oder Elektromotoren mit Ritzel und/oder Zahnstangen oder ein Kettenzug vorgesehen sind.

3. Vorrichtung nach Anspruch 1 **dadurch gekennzeichnet, daß** zum Bewegen der Transferrahmen (9) ein Seil- (26) und/oder Kettenzug vorgesehen ist.

4. Vorrichtung nach einem der Ansprüche 1 bis 3, **dadurch gekennzeichnet, daß** eine Linearführung (10) vorgesehen ist, auf der die Transferrahmen (9) verschiebbar sind.

5. Vorrichtung nach Anpruch 4, **dadurch gekennzeichnet, daß** es sich bei der Linearführung (10) um eine oder mehrere Führungsschienen (10) handelt und daß die Transferrahmen (9) im Bereich der Führungsschienen (10) Ausnehmungen aufweisen, deren Querschnitt dem Querschnitt der zugehörigen Führungsschiene (10) entspricht, beispielsweise einen T-förmigen Querschnitt (16).

6. Vorrichtung nach Anspruch 4, **dadurch gekennzeichnet, daß** es sich bei der Linearführung (10) um eine oder mehrere Führungsschienen (10) handelt, die jeweils eine Ausnehmung aufweisen, beispielsweise eine T-förmige Ausnehmung, und daß die Transferrahmen (9) im Bereich der Führungsschienen (10) entsprechend deren Ausnehmungen geformt sind und in diese eingreifen.

7. Vorrichtung nach Anspruch 1, **dadurch gekennzeichnet, daß** mit Greifern, beipielsweise Greifzangen oder Vakuumsaugern, versehene Greifarme zum Bewegen der Tansferrahmen (9) vorgesehen sind.

8. Vorrichtung nach Anspruch 7, **dadurch gekennzeichnet, daß** eine Linearführung (10) vorgesehen ist, auf der die Greifarme verschiebbar sind.

9. Vorrichtung nach Anspruch 8, **dadurch gekennzeichnet, daß** es sich bei der Linearführung (10) um eine oder mehrere Führungsschienen (10) handelt und daß die Greifarme im Bereich der Führungs schienen (10) Ausnehmungen aufweisen, deren Querschnitt dem Querschnitt der zugehörigen Führungsschiene (10) entspricht, beispielsweise einen T-förmigen Querschnitt (16).

10. Vorrichtung nach Anspruch 8, **dadurch gekennzeichnet, daß** es sich bei der Linearführung (10) um eine oder mehrere Führungsschienen (10) handelt, die jeweils eine Ausnehmung aufweisen, beispielsweise eine T-förmige Ausnehmung, und daß die Greifarme im Bereich der Führungsschienen (10) entsprechend deren Ausnehmungen geformt sind und in diese eingreifen.

11. Vorrichtung nach einem der Ansprüche 1 bis 10 **dadurch gekennzeichnet, daß** Mittel zum Ausheben der Formteile (7) aus der festen oder der beweglichen Werkzeughälfte (5,6) vorgesehen sind.

12. Vorrichtung nach Anspruch 11 mit seinem Rückbezug auf die Ansprüche 4 bis 10, **dadurch gekennzeichnet daß** die Linearführung (10) im Bereich der Werkzeughälften (5,6) ein oder mehrere Teilstücke (13) besitzt, die orthogonal zur Trennebene der Werkzeughälften (5,6) bewegbar sind.

13. Vorrichtung nach Anspruch 12, **dadurch gekennzeichnet, daß** die Teilstücke (13) der Linearführung (10) im Bereich der Werkzeughälften (5,6) nach Art eines Kreuztisches ausgebildet sind.

14. Vorrichtung nach einem der Ansprüche 4 bis 13, **dadurch gekennzeichnet, daß** die Linearführung (10) als Kugellinearführung ausgebildet ist.

15. Vorrichtung nach einem der Ansprüche 1 bis 14, **dadurch gekennzeichnet, daß** Halteelement (8) vorgesehen sind, die formteilseitig eine oder mehrere Spitzen (20) mit zylindrischem oder langlochförmigen Querschnitt aufweisen, die von dem Formteil (7) umfaßt werden.

16. Vorrichtung nach einem der Ansprüche 1 bis 15, **dadurch gekennzeichnet, daß** Haltelemente (8) vorgesehen sind, die formteilseitig eine oder mehrere zungenartige Spitzen (20) aufweisen, die von dem Formteil (7) ganz oder teilweise umfaßt werden.

17. Vorrichtung nach einem der Ansprüche 1 bis 16, **dadurch gekennzeichnet, daß** Haltelemente (8) vorgesehen sind, die formteilseitig eine oder mehrere Ausnehmungen besitzen und vorzugsweise eine Zentriernut (21) oder einen Zentriersteg (22) in den Ausnehmungen aufweisen.

18. Vorrichtung nach einem der Ansprüche 1 bis 17, **dadurch gekennzeichnet, daß** Haltelemente (8) vorgesehen sind, die an ihrem formteilseitigen Ende einen oder mehrere Stifte (23) aufweisen, wobei die Längsachse der Stifte (23) im wesentlichen orthogonal zur Trennebene der Werkzeughälften (5,6) verläuft und wobei das aus dem Halteelement (8) herausragende Teil der Stifte (23) von dem Formteil (7) umfaßt wird.

19. Vorrichtung nach einem der Ansprüche 1 bis 18, **dadurch gekennzeichnet, daß** die Halteelemente (8) in dem Transferrahmen (9) derart verschiebbar gelagert sind, daß sie von dem Formteil (7) wegbewegt und von diesem losgelöst werden können.

20. Vorrichtung nach Anspruch 19, **dadurch gekennzeichnet, daß** Mittel zum Verschieben der Halteelemente (8) vorgesehen sind, beispielsweise im Transferrahmen (9) befindliche Kolben-Zylinder Einheiten (18) und/oder mechanische Steilelemente.

21. Vorrichtung zum Aufnehmen und Transportieren von in Kavitäten hergestellten Formteilen (7) insbesondere Kunststoffformteilen (7), durch eine Produktionslinie mit mehreren Arbeitsstationen, wobei eine oder mehrere Arbeitsstationen mit Kavitäten bildenden Werkzeugen (5,6) ausgestattet sind, mit einem oder mehreren umlaufenden Lineartransportsystemen, (26, 29) die durch die Kavitäten verlaufen, vorzugsweise in deren Randbereichen, so daß sie bei der Herstellung der Formteile (7) mit diesen eine Verbindung eingehen, und wobei die Lineartransportsysteme (26, 29) mit den Formteilen (7) aus der jeweiligen Arbeitsstation entnommen und auf der Produktionslinie weiterbewegt werden,
**dadurch gekennzeichnet,**
**daß** die Lineartransportsysteme (26, 29) einen im wesentlichen zylindrischen Querschnitt aufweisen, daß die die Kavitäten bildenden Werkzeuge (5,6) im Bereich der Lineartransportsysteme (26,29) mit Ausnehmungen entsprechend dem Querschnitt der Lineartransportsysteme (26, 29) versehen sind, so daß diese bei geschlossenem Werkzeug (5,6) formschlüssig mit den Trennflächen der Werkzeughälften (5,6) abdichten, und daß im Bereich der Verbindung der Formteile (7) mit den Lineartransportsystemen (26,29) diese über ihren Querschnitt teilweise von dem Formteil (7) umfasst sind.

22. Vorrichtung nach Anspruch 21, **dadurch gekennzeichnet, daß** es sich bei den umlaufenden Lineartransportsystemen (26, 29) um an einem Kettenförderer oder einem Seil (26) befestigte Stangen (29) handelt und die Stangen (29) bei der Herstellung der Formteile (7) mit diesen eine Verbindung eingehen.

23. Vorrichtung nach Anspruch 21, **dadurch gekennzeichnet, daß** es sich bei den umlaufenden Lineartransportsystemen (26, 29) um biegeweiche Systeme wie Seile (26) oder dergleichen handelt.

24. Vorrichtung nach einem der Ansprüche 21 bis 23, **dadurch gekennzeichnet, daß** zwischen den eigentlichen Formteilen (7) und den Lineartransportsystemen (26) die Anformung von ein oder mehreren Zwischenstücken (29, 36, 27, 31) vorgesehen ist.

25. Vorrichtung nach einem der Ansprüche 21 bis 24, **dadurch gekennzeichnet, daß** Mittel zum Ausheben der Formteile aus der festen oder der beweglichen Werkzeughälfte (5,6) vorgesehen sind.

26. Vorrichtung nach Anspruch 25, **dadurch gekennzeichnet, daß** ein oder mehrere Hubelemente (18) vorgesehen sind, mit denen die Lineartransportsysteme orthogonal zur Transportrichtung bewegbar sind.

## Claims

1. Device for receiving and conveying moulded parts (7) produced in cavities, in particular plastic moulded parts (7), by a production line with a plurality of workstations, one or more workstations being equipped with tools (5, 6) forming cavities, **characterised in that** a plurality of transfer frames (9) passing through the production line are provided which remain outside the respective tool contour when the tool (5, 6) is closed, **in that** each of these transfer frames (9) has one or more retaining elements (8), **in that** means for moving these transfer frames (9) are provided by the production line, **in that** the tools (5, 6) have recesses in the region of the retaining elements (8), so the latter seal in an interlocking manner with the parting surfaces of the tool halves (5, 6) when the tool (5, 6) is closed, the retaining elements (8) extending into the interstice between the parting surfaces in such a way that they form a connection with the moulded part (7) when it is produced and a unit is formed from the transfer frame (9), retaining elements (8) and moulded part (7), this unit being removed from the respective workstation and being moved as a unit by the production line and a new, empty transfer frame (9) being provided respectively for each moulded part (7) and being prepared at the beginning of the production line, so a respective new unit of transfer frames (9), retaining elements (8) and moulded part (7) is formed and moved as a unit by the production line.

2. Device according to claim 1, **characterised in that** hydraulically and/or pneumatically actuable piston-cylinder units (18) or electric motors are provided with a pinion and/or toothed racks or a chain pulley for moving the transfer frames (9).

3. Device according to claim 1, **characterised in that** a cable (2b) and/or chain pulley is provided for moving the transfer frames (9).

4. Device according to any one of claims 1 to 3, **characterised in that** a linear guide (10) is provided on which the transfer frames (9) can be displaced.

5. Device according to claim 4, **characterised in that** the linear guide (10) is one or more guide rails (10) and **in that** the transfer frames (9) have recesses in the region of the guide rails (1c), the cross-section of which corresponds to the cross-section of the associated guide rail (10), for example a T-shaped cross-section (16).

6. Device according to claim 4, **characterised in that** the linear guide (1c) is one or more guide rails (10) which each have a recess, for example a T-shaped recess, and **in that** the transfer frames (9) are shaped in the region of the guide rails (10) to correspond to the recesses thereof and engage therein.

7. Device according to claim 1, **characterised in that** gripping arms provided with grippers, for example, gripping tongs or vacuum suction devices are provided for moving the transfer frames (9).

8. Device according to claim 7, **characterised in that** a linear guide (10) is provided on which the gripping arms can be displaced.

9. Device according to claim 8, **characterised in that** the linear guide (10) is one or more guide rails (10) and **in that** the gripping arms have recesses in the region of the guide rails (10), the cross-section of which corresponds to the cross-section of the associated guide rail (10), for example a T-shaped cross-section (16).

10. Device according to claim 8, **characterised in that** the linear guide (10) is one or more guide rails (10), which each have a recess, for example a T-shaped recess, and **in that** the gripping arms in the region of the guide rails (10) are formed to correspond to the recesses thereof and engage therein.

11. Device according to any one of claims 1 to 10, **characterised in that** means are provided for lifting the moulded part (7) from the rigid or movable tool halves (5, 6).

12. Device according to claim 11 with its reference back to claims 4 to 10, **characterised in that** the linear guide (10) in the region of the tool halves (5, 6) has one or more partial pieces (13) which can be moved orthogonally to the parting plane of the tool halves (5, 6).

13. Device according to claim 12, **characterised in that** the partial pieces (13) of the linear guide (10) are formed in the region of the tool halves (5, 6) in the manner of a cross table.

14. Device according to any one of claims 4 to 13, **characterised in that** the linear guide (10) is formed as a ball linear guide.

15. Device according to any one of claims 1 to 14, **characterised in that** retaining elements (8) are provided which, on the moulded part side, have one or more points (20) with a cylindrical or slot-shaped cross-section which are enclosed by the moulded part (7).

16. Device according to any one of claims 1 to 15, **characterised in that** retaining elements (8) are provided which, on the moulded part side, have one or more tongue-like points (20) which are completely or partially enclosed by the moulded part (7).

17. Device according to any one of claims 1 to 16, **characterised in that** retaining elements (8) are provided which have one or more recesses on the moulded part side and preferably have a centring groove (21) or a centring web (22) in the recesses.

18. Device according to any one of claims 1 to 17, **characterised in that** retaining elements (8) are provided which have one or more pins (23) on their end on the moulded part side, the longitudinal axis of the pins (23) extending substantially orthogonally to the parting plane of the tool halves (5, 6) and the part of the pins (23) projecting from the retaining element (8) being enclosed by the moulded part (7).

19. Device according to any one of claims 1 to 18, **characterised in that** the retaining elements (8) are displaceably mounted in the transfer frame (9) in such a way that they are moved away from the moulded part (7) and can be released therefrom.

20. Device according to claim 19, **characterised in that** means are provided for displacing the retaining elements (8), for example in piston-cylinder units (18) located in the transfer frame (9) and/or mechanical positioning elements.

21. Device for receiving and conveying moulded parts (7) produced in cavities, in particular plastic moulded parts (7), by a production line with a plurality of workstations, one or more workstations being equipped with tools (5, 6) forming cavities, with one or more revolving linear conveyor systems (26, 29) which run through the cavities, preferably in the edge regions thereof, so they form a connection with the moulded parts (7) during the production thereof and the linear conveyor systems (26, 29) being removed with the moulded parts (7) from the respective workstation and conveyed further on the production line, **characterised in that** the linear conveyor systems (26, 29) have a substantially cylindrical cross-section, **in that** the tools (5, 6) forming the cavities in the region of the linear conveyor systems (26, 29) are provided with recesses corresponding to the cross-section of the linear conveyor systems (26, 29), so the latter seal in an interlocking manner with the parting surfaces of the tool halves (5, 6) when the tool is closed (5, 6), and **in that** in the region of the connection of the moulded parts (7) to the linear conveyor systems (26, 29) these are partially enclosed over their cross-section by the moulded part (7).

22. Device according to claim 21, **characterised in that** the revolving linear conveyor systems (26, 29) are rods (29) fastened to a chain conveyor or a cable (26) and the rods (29), during production of the moulded parts (7), form a connection therewith.

23. Device according to claim 21, **characterised in that** the revolving linear conveyor systems (26, 29) are flexible systems such as cables (26) or the like.

24. Device according to any one of claims 21 to 23, **characterised in that** the moulding on of one or more adapters (29, 36, 27, 31) is provided between the actual moulded parts (7) and the linear conveyor systems (26).

25. Device according to any one of claims 21 to 24, **characterised in that** means are provided for lifting the moulded parts from the rigid or movable tool halves (5, 6).

26. Device according to claim 25, **characterised in that** one or more lifting elements (18) are provided with which the linear conveyor systems can be moved orthogonally to the conveying direction.

## Revendications

1. Dispositif de réception et de transport de pièces moulées (7) fabriquées dans des cavités, en particulier des pièces moulées en matière plastique (7), à travers une ligne de production équipée de plusieurs postes de travail, un ou plusieurs postes de travail étant équipés de moules (5, 6) formant les cavités, **caractérisé en ce qu'**il est prévu plusieurs cadres de transfert (9) acheminés à travers la ligne de production, qui restent éloignés du contour du moule correspondant lorsque le moule (5, 6) est fermé, **en ce que** chacun de ces cadres de transfert (9) comporte un ou plusieurs éléments de retenue (8), **en ce qu'**il est prévu des moyens destinés à acheminer ces cadres de transfert (9) à travers la ligne de production, **en ce que** les moules (5, 6) comportent des évidements dans la zone des éléments de retenue (8), de telle sorte que ces derniers, en présence d'un moule (5, 6) fermé, forment un assemblage étanche par conjugaison de forme avec les surfaces de séparation des demi-moules (5, 6), les éléments de retenue (8) s'étendant dans l'espace entre les surfaces de séparation de telle sorte qu'ils entrent en liaison avec celles-ci pendant la fabrication de la pièce moulée (7) et qu'il se forme un module constitué par un cadre de transfert (9), des éléments de retenue (8) et une pièce moulée (7), ce module étant évacué de chaque poste de travail et acheminé sous forme de module à travers la ligne de production, et un nouveau cadre de transfert (9) vide étant prévu pour chaque pièce moulée (7) et préparé au début de la ligne de production de telle sorte qu'il se forme respectivement un nouveau module formé par un cadre de transfert (9), les éléments de retenue (8) et la pièce moulée (7) et acheminé sous forme de module à travers la ligne de production.

2. Dispositif selon la revendication 1, **caractérisé en ce que**, pour le transport des cadres de transfert (9), il est prévu des unités de vérin et piston (18) à actionner par voie hydraulique et/ou pneumatique ou des moteurs électriques munis de pignons et/ou crémaillères ou un convoyeur à chaîne.

3. Dispositif selon la revendication 1, **caractérisé en ce que**, pour le transport des cadres de transfert (9), il est prévu un convoyeur à câble (26) ou à chaîne.

4. Dispositif selon l'une quelconque des revendications 1 à 3, **caractérisé en ce qu'**il est prévu un système de guidage linéaire (10) sur lequel peuvent coulisser les cadres de transfert (9).

5. Dispositif selon la revendication 4, **caractérisé en ce que** le système de guidage linéaire (10) est un système formé par un ou plusieurs rails de guidage (10) et **en ce que** les cadres de transfert (9) comportent dans la zone des rails de guidage (10) des évidements, dont la section correspond à la section des rails de guidage (10) associés, telle qu'une section en forme de T (16).

6. Dispositif selon la revendication 4, **caractérisé en ce que** le système de guidage linéaire (10) est un système formé par un ou plusieurs rails de guidage (10), dont chacun comporte un évidement, tel qu'un évidement en forme de T, et **en ce que** les cadres de transfert (9) sont conçus dans la zone des rails de guidage (10) avec une forme correspondant à celle des évidements desdits rails de guidage et entrent en prise avec ceux-ci.

7. Dispositif selon la revendication 1, **caractérisé en ce que**, pour le transport des cadres de transfert (9), il est prévu des bras de préhension munis d'organes de préhension, tels que des pinces ou des organes d'aspiration à vide.

8. Dispositif selon la revendication 7, **caractérisé en ce qu'**il est prévu un système de guidage linéaire (10) sur lequel peuvent coulisser les bras de préhension.

9. Dispositif selon la revendication 8, **caractérisé en ce que** le système de guidage linéaire (10) est un système formé par un ou plusieurs rails de guidage (10) et **en ce que** les bras de préhension comportent dans la zone des rails de guidage (10) des évidements, dont la section correspond à la section des rails de guidage (10) associés, telle qu'une section en forme de T (16).

10. Dispositif selon la revendication 8, **caractérisé en ce que** le système de guidage linéaire (10) est un système formé par un ou plusieurs rails de guidage (10), dont chacun comporte un évidement, tel qu'un évidement en forme de T, et **en ce que** les bras de préhension sont conçus dans la zone des rails de guidage (10) avec une forme correspondant à celle des évidements desdits rails de guidage et entrent en prise avec ceux-ci.

11. Dispositif selon l'une quelconque des revendications 1 à 10, **caractérisé en ce qu'**il est prévu des moyens destinés à soulever les pièces moulées (7) hors des demi-moules (5, 6) fixes ou mobiles.

12. Dispositif selon la revendication 11 avec une référence aux revendications 4 à 10, **caractérisé en ce que** le système de guidage linéaire (10), dans la zone des demi-moules (5, 6), comporte un ou plusieurs tronçons (13), qui peuvent être déplacés orthogonalement par rapport au plan de séparation des demi-moules (5, 6).

13. Dispositif selon la revendication 12, **caractérisé en ce que** les tronçons (13) du système de guidage linéaire (10) sont conçus dans la zone des demi-moules (5, 6) à la manière d'une table à mouvements croisés.

14. Dispositif selon l'une quelconque des revendications 4 à 13, **caractérisé en ce que** le système de guidage linéaire (10) est conçu sous forme de guidage linéaire avec roulement à billes.

15. Dispositif selon l'une quelconque des revendications 1 à 14, **caractérisé en ce qu'**il est prévu des éléments de retenue (8) qui comportent, du côté de la pièce moulée, une ou plusieurs pointes (20), avec une section cylindrique ou une section de la forme d'un trou oblong, qui sont entourées par la pièce moulée (7).

16. Dispositif selon l'une quelconque des revendications 1 à 15, **caractérisé en ce qu'**il est prévu des éléments de retenue (8) qui comportent, du côté de la pièce moulée, une ou plusieurs pointes (20) en forme de languette, qui sont entourées entièrement ou partiellement par la pièce moulée (7).

17. Dispositif selon l'une quelconque des revendications 1 à 16, **caractérisé en ce qu'**il est prévu des éléments de retenue (8) qui comportent, du côté de la pièce moulée, un ou plusieurs évidements, lesquels comportent, de préférence, une rainure de centrage (21) ou une nervure de centrage (22).

18. Dispositif selon l'une quelconque des revendications 1 à 17, **caractérisé en ce que** qu'il est prévu des éléments de retenue (8) qui comportent sur leur extrémité du côté de la pièce moulée un ou plusieurs tétons (23), l'axe longitudinal des tétons (23) étant sensiblement orthogonal au plan de séparation des demi-moules (5, 6) et la partie des tétons (23) qui s'avance hors de l'élément de retenue (8) est entourée par la pièce moulée (7).

19. Dispositif selon l'une quelconque des revendications 1 à 18, **caractérisé en ce que** les éléments de retenue (8) sont logés dans le cadre de transfert (9) de manière à pouvoir coulisser, de telle sorte qu'ils peuvent être écartés de la pièce moulée (7) et peuvent être détachés de celle-ci.

20. Dispositif selon la revendication 19, **caractérisé en ce qu'**il est prévu des moyens destinés à faire coulisser les éléments de retenue (8), tels que des unités de vérin et piston (18) ou des éléments de réglage mécaniques, montés dans le cadre de transfert (9).

21. Dispositif de réception et de transport de pièces moulées (7) fabriquées dans des cavités, en particulier des pièces moulées en matière plastique (7), à travers une ligne de production équipée de plusieurs postes de travail, un ou plusieurs postes de travail étant équipés de moules (5, 6) formant les cavités, comprenant un ou plusieurs systèmes de transport linéaires (26, ..., 29) continus, qui passent à travers les cavités, de préférence dans leurs zones de bordure, de telle sorte qu'ils entrent en liaison avec celles-ci pendant la fabrication des pièces moulées (7), et sachant que les systèmes de transport linéaires (26, ..., 29) sont évacués avec les pièces moulées (7) hors de chaque poste de travail et continuent à être acheminés à travers la ligne de production, **caractérisé en ce que** les systèmes de transport linéaires (26, ..., 29) présentent une section sensiblement cylindrique, **en ce que** les moules (5, 6) formant les cavités comportent dans la zone des systèmes de transport linéaires (26, ..., 29) des évidements qui correspondent à la section des systèmes de transport linéaires (26, ..., 29), de telle sorte que ceux-ci, en présence d'un moule (5, 6) fermé, forment un assemblage étanche par conjugaison de forme avec les surfaces de séparation des demi-moules (5, 6), et **en ce que** dans la zone de l'assemblage entre les pièces moulées (7) et les systèmes de transport linéaires (26, ..., 29), la section de ces derniers est partiellement entourée par la pièce moulée (7).

22. Dispositif selon la revendication 21, **caractérisé en ce que** les systèmes de transport linéaires continus (26, ..., 29) sont constitués par un convoyeur à chaîne ou une barre (29) fixée contre un câble (26) et, pendant la fabrication des pièces moulées (7), les barres (29) entrent en liaison avec celles-ci.

23. Dispositif selon la revendication 21, **caractérisé en ce que** les systèmes de transport linéaires continus (26, ..., 29) sont constitués par des systèmes facilement flexibles, tels que des câbles (26) ou des éléments analogues.

24. Dispositif selon l'une quelconque des revendications 21 à 23, **caractérisé en ce qu'**il est prévu de former une ou plusieurs pièces intermédiaires (29, 36 ; 27, 31) entre les pièces moulées (7) proprement dites et les systèmes de transport linéaires (26).

25. Dispositif selon l'une quelconque des revendications 21 à 24, **caractérisé en ce qu'**il est prévu des moyens destinés à soulever les pièces moulées hors des demi-moules (5, 6) fixes ou mobiles.

26. Dispositif selon la revendication 25, **caractérisé en ce qu'**il est prévu un ou plusieurs éléments de levage (18), avec lesquels les systèmes de transport linéaires peuvent être déplacés orthogonalement par rapport au sens de transport.
